# FASCICULE DE BREVET EUROPEEN

(11) **EP 0 694 896 B1**
(45) Date de publication et mention de la délivrance du brevet: **04.11.1998**
(21) Numéro de dépôt: 95401659.8
(22) Date de dépôt: 10.07.1995
(51) Int. Cl.: G09B 9/04, G09B 9/05

(54) **Plate-forme mobile et son utilisation pour la réalisation d'une cabine de simulation**
Bewegliche Plattform und ihre Anwendung zur Verwirklichung einer Simulations-Kabine
Mobile platform and its utilisation for realising a simulation cabin

(30) Priorité: 29.07.1994 FR 9409430
(43) Date de publication de la demande: 31.01.1996
(73) Titulaire: EBIM S.A., F-04100 Manosque (FR)
(72) Inventeur: Lapalus, Pierre, F-04220 Saint Tulle (FR)
(74) Mandataire: Rochet, Michel

(56) Documents cités:
- WO-A-93/01577
- DE-A- 4 109 827
- FR-A- 2 551 574
- FR-A- 2 677 155
- GB-A- 1 160 471
- US-A- 4 251 140
- US-A- 4 303 236

## Description

La présente invention a pour objet une plate-forme mobile, utilisable notamment dans la réalisation d'une cabine de simulation des mouvements ressentis en particulier dans la cabine de pilotage de trains, avions, véhicules terrestres.

L'utilisation de cabines de simulation de conduite présente de nombreux avantages, en particulier dans le cadre de la formation de futurs pilotes de trains, notamment trains à grande vitesse, d'avions ou encore de conducteurs de véhicules automobiles terrestres, en particulier de poids lourds.

La cabine de simulation doit être en mesure de reproduire, aussi bien dans le temps que dans l'espace, les différents mouvements que subira réellement la cabine en fonctionnement et que ressentira le pilote de l'engin, en vue d'adopter le comportement adéquat. Dans la cabine de simulation, le pilote doit donc ressentir les accélérations, les décélérations, le freinage plus ou moins accentué, le roulis, les déports et autres mouvements provoqués par la conduite elle-même ou le profil de la voie ou par la survenance d'obstacles imprévus.

La cabine de simulation doit donc être à même de se déplacer suivant un axe longitudinal, dans un plan horizontal parallèle à cet axe ou incliné sur cet axe (accélération, décélération, freinage), et/ou suivant un axe transversal perpendiculaire à cet axe longitudinal (déport), éventuellement combiné à des mouvements dans des plans inclinés par rapport à cet axe transversal (mouvement de roulis).

Un exemple de simulateur de ce type, appliqué plus spécifiquement aux voitures automobiles est décrit dans FR-A-2677155.
Dans le but de restituer la totalité des mouvements possibles d'une voiture, ce dispositif comporte une plate-forme supportant, par l'intermédiaire d'un dispositif vibrant, un poste de conduite, la dite plate-forme étant supportée par un dispositif d'animation comprenant deux parties :
① une partie inférieure produisant des mouvements rectilignes,
② et une partie supérieure produisant des mouvements angulaires à au moins deux degrés de liberté.

Tous les mouvements de ce simulateur sont obtenus grâce à l'emploi de vérins dont certains au moins sont animés hydrauliquement.

L'utilisation de vérins, nécessairement nombreux, compte tenu de la multiplicité des mouvements à reproduire pose en lui-même un problème de compacité de l'ensemble.

L'utilisation de vérins pneumatiques présente, en outre, l'inconvénient de ne pas permettre de satisfaire un paramètre déterminant de la simulation, à savoir la reproduction fidèle de l'ensemble des mouvements à cause de la faible bande passante de cette technologie et des non-linéarités dues aux seuils.

Le système hydraulique pose le même problème de compacité lorsqu'il anime des vérins; il s'accompagne en outre de problèmes de nuisance (bruit), de fiabilité et d'entretien (usure du matériel) et de tous les risques liés à la présence d'huile sous pression.

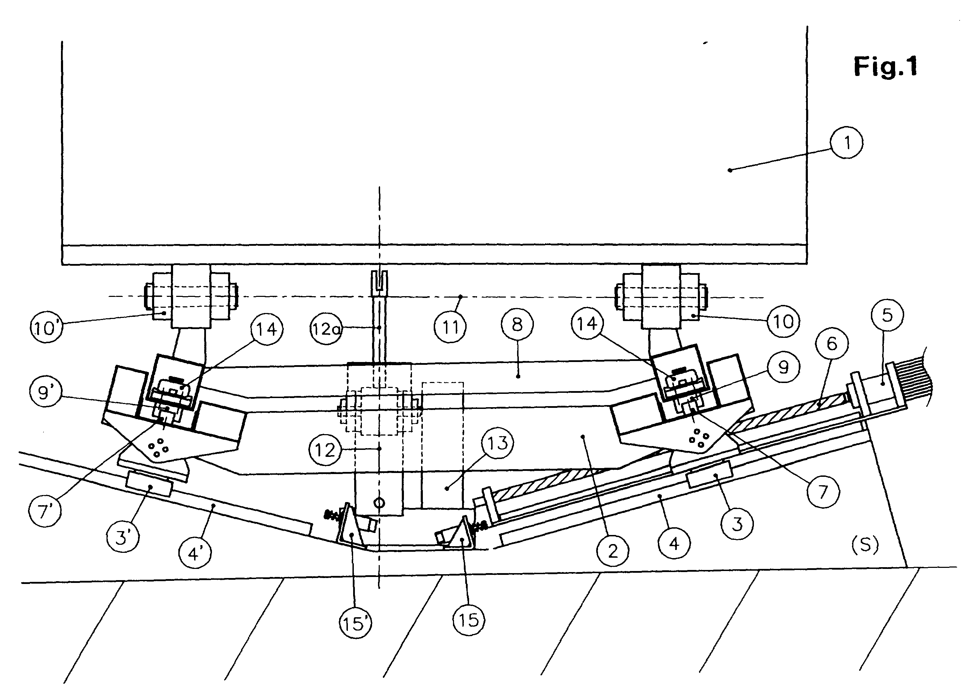

L'invention a pour objet une nouvelle plate-forme mobile utilisable notamment pour la réalisation d'une cabine de simulation, cette plate-forme comprenant deux ensembles de glissières et de chariots mobiles susceptibles d'effectuer des mouvements longitudinaux, transversaux et de roulis, sur un support fixe, la dite plate-forme étant caractérisée en ce qu'elle comprend (fig. 1, la flèche représente l'avant de la cabine) :
- un système embarqué, désigné ci-après cabine (**1**)
- un premier chariot (**2**) coulissant au moyen de patins (**3**) et (**3**') sur deux paires de glissières (**4**) et (**4**'), fixées sur un support fixe (**S**) et formant entre elles un V ouvert, le chariot (**2**) se déplaçant grâce à l'emploi d'un binôme moteur électrique (**5**) / écrou-vis à billes (**6**), la vis étant disposée parallèlement à la glissière (**4**), l'écrou étant solidaire du chariot (**2**), le dit chariot comportant lui-même une paire de glissières (**7**) et (**7**'), disposées perpendiculairement aux glissières (**4**) et (**4**').
- un deuxième chariot (**8**) coulissant sur les glissières (**7**) et (**7**') grâce à l'emploi de patins (**9**) et (**9**'), le déplacement du chariot (**8**) étant obtenu grâce à l'emploi d'un binôme moteur électrique / écrou-vis à billes, cette vis étant disposée parallèlement à la glissière (**7**) (vis non représentée), ce deuxième chariot supportant des paliers (**10**) et (**10**'), solidaires de la cabine (**1**) et définissant un axe de roulis (**11**) autour duquel la cabine (**1**) peut tourner grâce à l'emploi d'un vérin électrique (**12**) / (**12a**), le corps de ce vérin et son moteur (**13**) étant solidaires du chariot (**8**) alors que la tige dudit vérin (**12a**) est solidaire de la cabine (**1**).

L'expression "système embarqué" est utilisé ici pour désigner l'ensemble destiné à se mouvoir dans diverses directions du fait des déplacements des chariots mentionnés ci-avant : il peut notamment s'agir d'une cabine de simulation avec ses aménagements et équipements dont il sera question plus loin (d'où le terme "cabine" retenu par simplification mais il va de soi que cette application spécifique ne saurait en aucune manière restreindre la portée de l'invention.

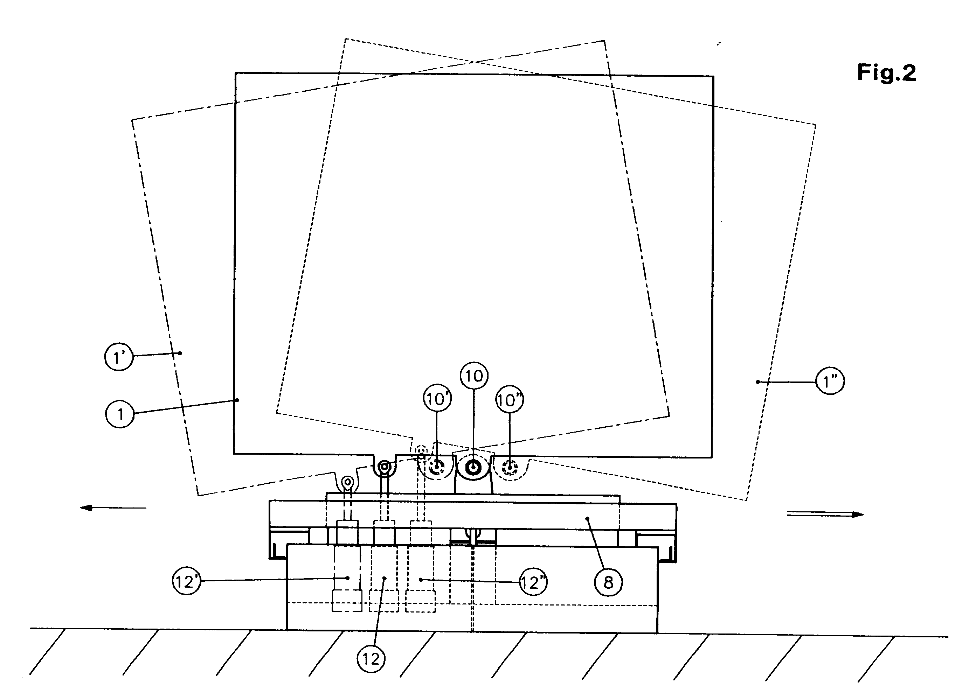

La **figure 2** représente une vue arrière de la plate-forme conforme à l'invention, destinée à illustrer la combinaison de la translation latérale et le mouvement de roulis. Sur cette figure, la cabine se trouve en position neutre (plancher parallèle au sol). Dans sa position initiale, la cabine (**1**) repose sur les paliers de l'axe de roulis et est maintenue en position horizontale grâce au vérin (**12**). Un déplacement du chariot (**8**) dans le sens de la simple flèche (--->) entraîne le déplacement du vérin (position **12**') et des paliers (**10**), provoquant à la fois une translation de la cabine et une inclinaison de celle-ci (**position 1**') lorsque la tige du vérin est enfoncée. Un mouvement inverse (===>) du chariot (**8**) et du vérin (position **12"**) associé à la sortie de la tige du vérin provoque à la fois un déplacement latéral de la cabine et une inclinaison inverse de celle-ci (**1**").

Il va de soi que si on agit seulement sur le vérin, seule la rotation ou inclinaison de la cabine sera observée, alors que si on ne déplace que le chariot (**8**), sans agir sur le vérin, seule une translation dans le même plan sera observée.

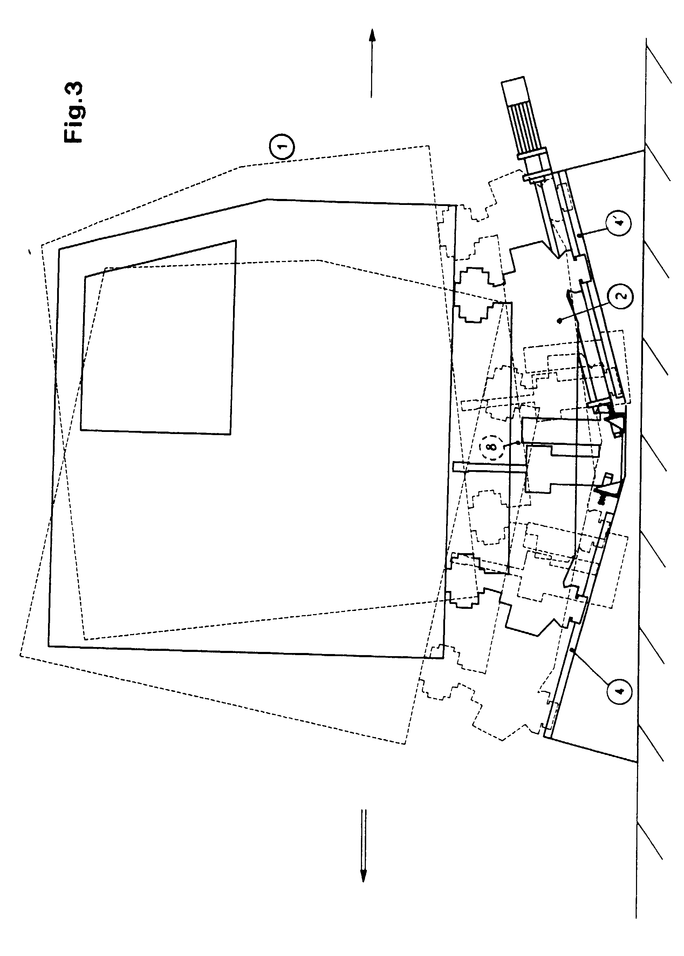

La **figure 3** illustre le mouvement longitudinal de la cabine (**1**), dans une position neutre (plancher horizontal) ou en position avant abaissé ou encore en position avant relevé. Le chariot (**8**) étant figé, ces positions sont obtenues grâce au déplacement du chariot (**2**), soit vers l'avant de la cabine (--->) [obtention de la position avant relevé], soit vers l'arrière (===>) [avant abaissé]. Ces abaissements et relèvements de l'avant de la cabine sont obtenus grâce à la disposition en V des glissières (**4**) et (**4'**).

Selon le dispositif conforme à l'invention, la cabine (**1**) se déplace longitudinalement sur les glissières (**4**) et (**4'**) sous l'action du binôme moteur (**5**) / écrou-vis à billes (**6**), transversalement sur les glissières (**7**) et (**7'**) sous l'action du binôme moteur / écrou-vis à billes, la vis étant disposée parallèlement à ces glissières et est animée d'un mouvement de roulis sous l'action du vérin électrique (**12**)/(**12'**), ces différents mouvements pouvant être provoqués successivement ou simultanément.

Ainsi qu'il a été précisé, les deux paires de glissières (**4**) et (**4'**) sont fixées sur le support ou embase (**S**) selon un V ouvert. A titre indicatif, ces glissières forment un angle généralement compris entre 130 et 170°. Bien qu'il soit possible d'utiliser une embase de forme parallélépipédique et de fixer sur cette embase les glissières selon l'angle choisi au moyen de cornières et autres pièces de forme et de dimensions appropriées, il est avantageux de donner directement à l'embase cette forme de V et de fixer les glissières directement sur cette embase.

Les quatre glissières sont disposées parallèlement entre elles et, en général, les deux glissières arrière sont disposées dans le prolongement des deux glissières avant (par référence à l'avant de la cabine). Il va de soi qu'on ne sortirait pas du cadre de l'invention en choisissant des écartements différents pour les glissières avant et pour les glissières arrière, pour autant qu'une telle disposition ne porte pas atteinte à la stabilité de la plate-forme.

D'une manière générale, le support (**S**) peut être fixé directement sur la dalle du local destiné à recevoir la plate-forme, bien qu'il soit toujours possible d'interposer des amortisseurs de vibrations.

Les patins coulissants (**3**) et (**3'**) sont avantageusement des patins à billes, et, dans le but de compenser l'hyperstatisme du système, il est recommandé d'utiliser des éléments élastiques ou silent-blocs pour former l'articulation dans le mouvement relatif entre les patins et le chariot. On peut utiliser d'autres types de patins, de même qu'il serait possible d'utiliser des systèmes de roues ou de galets, sous réserve de compléter le système par des dispositifs susceptibles d'empêcher le retournement de l'ensemble mobile.

Bien que le déplacement longitudinal puisse être assuré grâce à un seul binôme moteur/ écrou-vis à billes, il va de soi qu'il est possible d'utiliser un binôme sur chacune des glissières ou sur au moins deux des glissières.

Les moteurs électriques destinés aux déplacements longitudinaux et transversaux peuvent être choisis dans une large gamme de moteurs, par exemple les moteurs synchrones, les moteurs à courant continu, les moteurs asynchrones. On donne toutefois la préférence aux moteurs synchrones, en particulier aux moteurs synchrones sans bague ni balais, couramment appelés moteurs Brushless.

Les patins (**9**) et (**9'**) sont également choisis parmi les patins à billes, et ces patins sont avantageusement rendus solidaires du chariot (**8**) grâce à des éléments élastiques ou silent-blocs (**14**). On donne la préférence aux amortisseurs pouvant travailler aussi bien en compression qu'en traction et capables de supporter des efforts latéraux importants.

Le moteur du vérin (**12**) peut être choisi parmi les moteurs cités précédemment mais on utilise de préférence un moteur du type Brushless.

L'ensemble conforme à l'invention peut, enfin, comporter des butées d'arrêt (**15**) / (**15'**), fixées sur le support (**S**).

La plate-forme mobile peut, grâce à ses divers déplacements, reproduire l'ensemble des mouvements constatés dans la réalité, à l'exception des vibrations qu'on sait reproduire pour des moyennes fréquences au moyen de haut-parleurs. en cabine.

Le mouvement longitudinal vers l'avant de la cabine s'effectue, grâce aux glissières en V, selon un mouvement autour d'un centre de rotation virtuel. La cabine se relève, ce qui correspond à la phase d'accélération. A contrario, le relèvement de l'arrière de la cabine correspond à la décélération ou au freinage, selon la rapidité du mouvement. La rotation de la cabine correspond au roulis tel que provoqué par les accélérations centrifuges et centripètes et aux dévers de la voie dans le cas des trains. Les déplacements transversaux, associés au roulis, correspondent aux mouvements latéraux d'aiguillages par exemple.

La cabine de simulation utilisée dans la réalité pourra comporter un pupitre, un système de visualisation du décor ou paysage ou plus généralement de l'environnement et divers aménagements (cloisons, toiture, climatisation, siège de pilote, sonorisation etc.)

Les divers mouvements de la plate-forme mobile selon l'invention seront, en général, pilotés par ordinateur ou par un automate et seront avantageusement associés à un système de projection d'image.

A titre d'exemple, les mouvements sont pilotés par un ordinateur qui calcule notamment les angles à donner au plancher de la cabine par rapport à l'horizontale, en fonction de la base de données du support sur lequel l'engin se déplace (voie, route...) et des variables calculées à l'instant **t** à partir du modèle mathématique de la dynamique du véhicule. Ces angles sont envoyés à un automate par liaison série et interprétés par une carte de communication. L'automate possède trois cartes d'axe commandant chacune une électronique de puissance adaptée à la commande des moteurs installés sur chacun des trois axes, cette électronique pouvant être un onduleur à fréquence variable dans le cas de moteurs synchrones.

## Revendications

1. Plate-forme mobile utilisable notamment pour la réalisation d'une cabine de simulation, comprenant deux ensembles de glissières, de chariots (**4, 8**) mobiles susceptibles d'effectuer des mouvements longitudinaux, transversaux et de roulis, sur un support fixe, un système embarqué, désigné ci-après cabine (**1**), la dite plate-forme étant caractérisée en ce qu'elle comprend (**figure 1**):
- un premier chariot (**2**) coulissant au moyen de patins (**3**) et (**3**') sur deux paires de glissières (**4**) et (**4**'), fixées sur un support fixe (**S**) et formant entre elles un V ouvert, le chariot (**2**) se déplaçant grâce à l'emploi d'un binôme moteur électrique (**5**) / écrou-vis à billes (**6**), cette dernière étant disposée parallèlement à la glissière (**4**), l'écrou étant solidaire du chariot (**2**), le dit chariot comportant lui-même une paire de glissières (**7**) et (**7**'), disposées perpendiculairement aux glissières (**4**) et (**4**'),
- un deuxième chariot (**8**) coulissant sur les glissières (**7**) et (**7**') grâce à l'emploi de patins (**9**) et (**9**'), le déplacement du chariot (**8**) étant obtenu grâce à l'emploi d'un binôme moteur électrique / écrou-vis à billes, cette vis étant disposée parallèlement à la glissière (**7**) (vis non représentée), ce deuxième chariot supportant des paliers (**10**) et (**10'**), solidaires de la cabine (**1**) et définissant un axe de roulis (**11**) autour duquel la cabine (**1**) peut tourner grâce à l'emploi d'un vérin électrique (**12**) / (**12a**), le corps de ce vérin et son moteur (**13**) étant solidaires du chariot (**8**) alors que la tige dudit vérin (**12a**) est solidaire de la cabine (**1**).

2. Plate-forme selon la revendication 1 caractérisée en ce que les glissières (**4**) et (**4**') forment entre elles un angle compris entre 130 et 170°.

3. Plate-forme selon l'une quelconque des revendications 1 à 2 caractérisée en ce que les glissières (**4**) / (**4**') sont disposées parallèlement entre elles et, en général, les deux glissières arrière sont disposées dans le prolongement des deux glissières avant (par référence à l'avant de la cabine).

4. Plate-forme selon l'une quelconque des revendications 1 à 3 caractérisée en ce que les patins coulissants sont des patins à billes.

5. Plate-forme selon l'une quelconque des revendications 1 à 4 caractérisée en ce que les patins (**3**), (**3**'), (**9**), (**9**') sont rendus solidaires des chariots (**2**) et (**8**) grâce à des éléments élastiques ou silentblocs (**14**).

6. Plate-forme selon l'une quelconque des revendications 1 à 5 caractérisée en ce que les moteurs électriques destinés aux déplacements longitudinaux et transversaux peuvent être choisis parmi les moteurs synchrones, les moteurs à courant continu, les moteurs asynchrones et de préférence parmi les moteurs asynchrones sans bague ni balais, du type Brushless.

7. Une cabine de simulation de conduite, notamment de train, d'avion ou de véhicule terrestre, caractérisée en ce qu'elle comprend une plate-forme mobile selon l'une quelconque des revendications 1 à 6, cette cabine comprenant notamment un pupitre, un système de visualisation de l'environnement et divers aménagements ou équipements (cloisons, toiture, climatisation, siège du pilote, sonorisation).

8. Une cabine selon la revendication 7 caractérisée en ce que ses mouvements sont pilotés par ordinateur ou par un automate.

9. Une cabine selon l'une quelconque des revendications 7 et 8 caractérisée en ce qu'elle comprend une association synchronisée d'une plate-forme selon l'une quelconque des revendications 1 à 6 et un système de projection d'image.

## Patentansprüche

1. Bewegliche Plattform, die insbesondere für die Herstellung einer Simulations-Kabine nutzbar ist, mit zwei Gruppen von Gleitführungen, beweglichen Schlitten (4, 8), die imstande sind, Längs-, Quer- und Rollbewegungen auf einem festen Träger auszuführen, und einem aufgesetzten System, das nachfolgend Kabine(1) genannt.ist, wobei die genannte Plattform dadurch gekennzeichnet ist, daß sie folgende Merkmale aufweist (Fig. 1):
- ein erster Schlitten (2), der mittels Kufen (3) und (3') auf zwei Paaren von Gleitführungen (4) und (4') gleitet, die auf einem festen Träger (S) befestigt sind und zueinander ein offenes V bilden, wobei sich der Schlitten (2) dank der Verwendung einer Doppelanordnung aus einem Elektromotor (5) und einer Kugelmutter-Kugelgewindespindel (6) bewegt, diese letztgenannte parallel zur Gleitführung (4) angeordnet ist, die Mutter fest mit dem Schlitten (2) verbunden ist und der Schlitten seinerseits ein Paar Gleitführungen (7) und (7') aufweist, die senkrecht zu den Gleitführungen (4) und (4') angeordnet sind, und
- ein zweiter Schlitten (8), der auf den Gleitführungen (7) und (7') dank der Verwendung von Kufen (9) und (9') gleitet, wobei die Bewegung des Schlittens (8) dank der Verwendung einer Doppelanordnung aus einem Elektromotor und einer Kugelmutter-Kugelgewindespindel erhalten wird, diese Gewindespindel parallel zur Gleitführung (7) (Gewindespindel nicht dargestellt) verläuft, dieser zweite Schlitten Lager (10) und (10') trägt, die fest mit der Kabine (1) verbunden sind und eine Rollachse (11) festlegen, um die die Kabine (1) dank der Verwendung einer eletrischen Hubeinrichtung (12)/(12a) schwenken kann, und der Körper dieser Hubeinrichtung und ihr Antrieb (13) fest mit dem Schlitten (8) verbunden sind, während die Stange der genannten Hubeinerichtung (12a) fest mit der Kabine (1) verbunden ist.

2. Plattform nach Anspruch 1, dadurch gekennzeichnet, daß die Gleitführungen (4) und (4') zwischeneinander einen Winkel bilden, der zwischen 130 und 170° liegt.

3. Plattform nach irgendeinem der Ansprüche 1 bis 2, dadurch gekennzeichnet, daß die Gleitführungen (4)/(4') parallel zueinander angeordnet sind, und daß die beiden hinteren Gleitführungen im allgemeinen in der Verlängerung der beiden vorderen Gleitführungen angeordnet sind (bezogen auf die Vorderseite der Kabine).

4. Plattform nach irgendeinem der Ansprüche 1 bis 3, dadurch gekennzeichnet, daß die gleitenden Kufen Kugel-Kufen sind.

5. Plattform nach irgendeinem der Ansprüche 1 bis 4, dadurch gekennzeichnet, daß die Kufen (3), (3'), (9), (9') mit den Schlitten (2) und (8) dank elastischer Elemente oder Silentblocs (14) fest verbunden sind.

6. Plattform nach irgendeinem der Ansprüche 1 bis 5, dadurch gekennzeichnet, daß die Elektromotoren, die zur Längs- und Querbewegung bestimmt sind, unter den Synchronmotoren, den Gleichstrommotoren, den Asynchronmotoren und bevorzugt den Asynchronmotoren ohne Schleifring und Bürste nach Art eines "Brushless"-Motors bzw. eines bürstenlosen Motors gewählt sind.

7. Kabine zur Simulierung des Verhaltens, besonders der Bewegung, eines Flugzeugs oder eines bodengebundenen Fahrzeugs, dadurch gekennzeichnet, daß sie eine bewegliche Plattform nach irgendeinem der Ansprüche 1 bis 6 aufweist, und daß diese Kabine bevorzugt ein Steuerpult, ein System zur Sichtbarmachung der Umgebung und verschiedene Einrichtungs- oder Ausstattungsanordnungen aufweist (Wände, Dach, Klimatisierung, Pilotensitz, Beschallung).

8. Kabine nach Anspruch 7, dadurch gekennzeichnet, daß ihre Bewegungen von einer Datenverarbeitungsanlage oder einem Automaten gesteuert sind.

9. Kabine nach irgendeinem der Ansprüche 7 und 8, dadurch gekennzeichnet, daß sie eine synchronisierte Zuordnung einer Plattform nach irgendeinem der Ansprüche 1 bis 6 und eines Bild-Projektionssystems aufweist.

## Claims

1. Mobile platform that can be used in particular for producing a simulation cabin, comprising two sets of slideways, and mobile carriages (4, 8) capable of performing longitudinal, transverse and rolling movements on a stationary support, an on-board system hereafter denoted cabin (1), the said platform being characterized in that it comprises (Figure 1):
- a first carriage (2) sliding by means of runners (3) and (3') on two pairs of slideways (4) and (4') fixed to a stationary support (S) and forming an open V between them, the carriage (2) moving thanks to the use of an electric motor (5)/nut-ballscrew (6) pairing, this screw being arranged parallel to the slideway (4) with the nut secured to the carriage (2), the said carriage itself comprising a pair of slideways (7) and (7') arranged at right angles to the slideways (4) and (4'),
- a second carriage (8) sliding on the slideways (7) and (7') thanks to the use of runners (9) and (9'), the movement of the carriage (8) being obtained thanks to the use of an electric motor/nut-ballscrew pairing, this screw being arranged parallel to the slideway (7) (the screw is not depicted), this second carriage supporting bearings (10) and (10') secured to the cabin (1) and defining a roll axis (11) about which the cabin (1) can turn thanks to the use of an electric ram (12)/(12a), the body of this ram and its motor (13) being secured to the carriage (8) while the rod of the said ram (12a) is secured to the cabin (1).

2. Platform according to Claim 1, characterized in that the slideways (4) and (4') form between them an angle of between 130 and 170°.

3. Platform according to either of Claims 1 and 2, characterized in that the slideways (4) / (4') are arranged parallel to each other and, in general, the two rear slideways are arranged in line with the two front slideways (with reference to the front of the cabin).

4. Platform according to any one of Claims 1 to 3, characterized in that the sliding runners are ball runners.

5. Platform according to any one of Claims 1 to 4, characterized in that the runners (3), (3'), (9), (9') are secured to the carriages (2) and (8) by elastic elements or silentblocs (14).

6. Platform according to any one of Claims 1 to 5, characterized in that the electric motors intended for the longitudinal and transverse movements may be chosen from synchronous motors, dc motors, asynchronous motors and preferably from asynchronous motors without rings or brushes, of the brushless type.

7. A cabin for simulating the driving, in particular, of a train, an aircraft or a land vehicle, characterized in that it comprises a mobile platform according to any one of Claims 1 to 6, this cabin comprising, in particular, a control desk, a system for displaying the environment and various fittings or equipment items (partitions, roof, air-conditioning, driver's seat, sound).

8. A cabin according to Claim 7, characterized in that its movements are controlled by a computer or by a controller.

9. A cabin according to either of Claims 7 and 8, characterized in that it comprises a synchronized association of a platform according to any one of Claims 1 to 6 and an image-projection system.
